# EUROPEAN PATENT SPECIFICATION

(11) **EP 1 082 996 B1**
(45) Date of publication and mention of the grant of the patent: **23.04.2003**
(21) Application number: 99117765.0
(22) Date of filing: 09.09.1999
(51) Int. Cl.: B01F 13/10

(54) **An appliance for the automated dispensing of fluids, particularly suitable for dispensing colouring pastes, equipped with device for moving the support surface of the vessel for colour mixing**
Anlage zur automatischen Abgabe von Fluiden, insbesondere zur Abgabe von Farbstoffen, mit einer Vorrichtung zum Bewegen des Trägers für das die gefärbte Mischung enthaltende Behälter
Installation pour la préparation automatique de fluides, en particulier pour la préparation de peintures, équipée d'un dispositif pour positioner le support du récipient pour le mélange

(43) Date of publication of application: 14.03.2001
(73) Proprietor: J Colors S.p.A., 20020 Lainate (Milano) (IT)
(72) Inventor: Goebel Junghanns, Carlo Alberto, 20131 Milan (IT)
(74) Representative: Gervasi, Gemma, Dr.

(56) References cited:
- US-A- 4 046 287
- US-A- 4 258 759

## Description

The present invention relates to an appliance for the automated dispensing of fluids, particularly suitable for dispensing colouring pastes, equipped with a device for moving the support surface of a vessel for mixing and collecting the colouring pastes.

As is known, for dispensing colouring pastes having a given colour, appliances commonly known as colour meters are used, which are suitable for dispensing colouring pastes of different colours to a semifinished paint to obtain, according to preset formulae, a finished paint in a colour pre-selected by the user, for example in a sales point.

Such an apparatus is known from US-A-4 046 287, being the base of the preamble of claim 1.

Colour meters normally use a white paste as a base colour; to which pastes of other colours in preset doses, for the purpose of obtaining the colour selected by the user are added.

The colours that can be obtained by means of a colour meter are selected with a keyboard which allows the user to key in the code for the desired colour, which corresponds to a mixture of preset colours in preset doses too.

Colour meters are often equipped with a spectrophotometer, which allows the "reading" of a colour by means of spectral analysis of a sample of that colour and then the sending to the appliance of the data necessary to faithfully reproduce the desired colour by mixing pastes of appropriate colours.

The various colouring pastes are contained in proper containers housed inside the colour meter and each is connected to a relevant motor pump for drawing a required quantity of colouring paste from the container and for delivering it to a dispensing unit which subsequently dispenses it into a collecting vessel.

The collecting vessel is normally supported by a surface located inside the appliance, in a position underneath a group of delivery nozzles each connected to a relevant container of colouring paste.

The collecting vessel usually contains, as mentioned before, a white base colour with which the different colouring pastes are mixed, in appropriate doses, to make the desired colour.

The known systems for positioning the collecting vessel for the colouring pastes has, however, a drawback in that vessels of considerable dimensions and weight are often used and this requires a considerable effort by the user who must load and unload the vessel from the relevant support surface, which is placed at an height not suitable for these operations.

The main purpose of the present invention is thus to provide an appliance for the automated dispensing of fluids, particularly suitable for dispensing colouring pastes, which is equipped with a device for moving the support surface of the vessel where the colouring pastes are mixed.

Within this purpose, one object of the present invention is to provide an appliance for the automated dispensing of fluids, particularly suitable for dispensing colouring pastes, which is provided: with means for detecting the height reached by the support surface of the vessel for mixing the colouring pastes.

Another object of the present invention is to provide an appliance for the automated dispensing of fluids, particularly suitable for dispensing colouring pastes, whose support surface is easily accessible to by a user who uses the appliance.

Still another object of the present invention is to provide an appliance for the automated dispensing of fluids, particularly suitable for dispensing colouring pastes, in which the support surface is able to hold vessels of different sizes and weights.

Last but not least object of the present invention is to provide an appliance for the automated dispensing of fluids, which is highly reliable, and can be made relatively easily and at competitive costs.

This task, as well as these and other objects which will be shown more clearly later, are carried out by an appliance for the delivery of fluids, particularly suitable for the delivery of colouring pastes, comprising a plurality of containers filled with colouring pastes and connected to an equal number of delivery nozzles to deliver said colouring pastes into a collecting vessel placed on to a support surface, characterized in that said support surface is suitable to protrude from a portion of said appliance and! is driven by driving means to translate vertically in relation to lower and upper surfaces of said appliance.

Further characteristics and advantages of the invention are defined in the dependent claims and will be shown more fully by the description of a preferred, but not exclusive, embodiment of the dispensing appliance according to the present invention, illustrated as an indicative and nonlimiting example in the attached drawings, where:

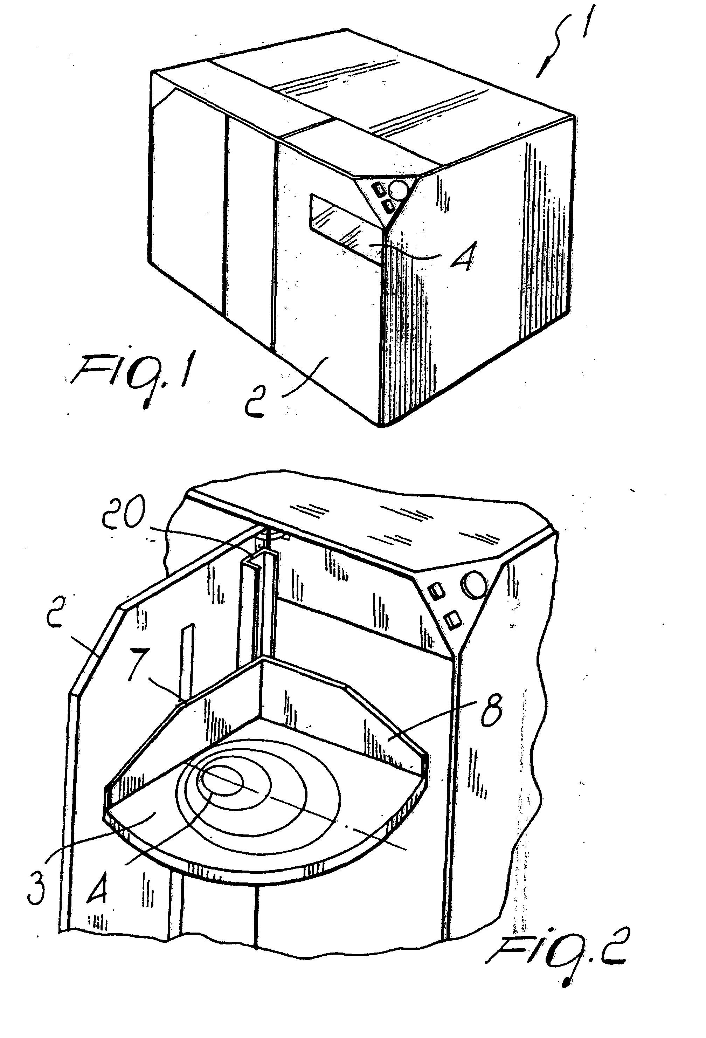

Figure 1 is a perspective view of the appliance according to the present invention:
Figure 2 is a perspective, partial, view showing in detail the support surface of the collecting vessel;
Figure 3 is a sectioned side view, showing the driving means for the support surface of the collecting vessel, in the appliance according to the present invention;
Figure 4 is a sectioned plan view, showing the positions which can be assumed by the support surface in the appliance according to the present invention;
Figure 5 is a cross-section side view, showing in detail a safety device connected to the driving means for the support surface; and
Figure 6 is another side view of the driving means for the support surface in the appliance according to the present invention.

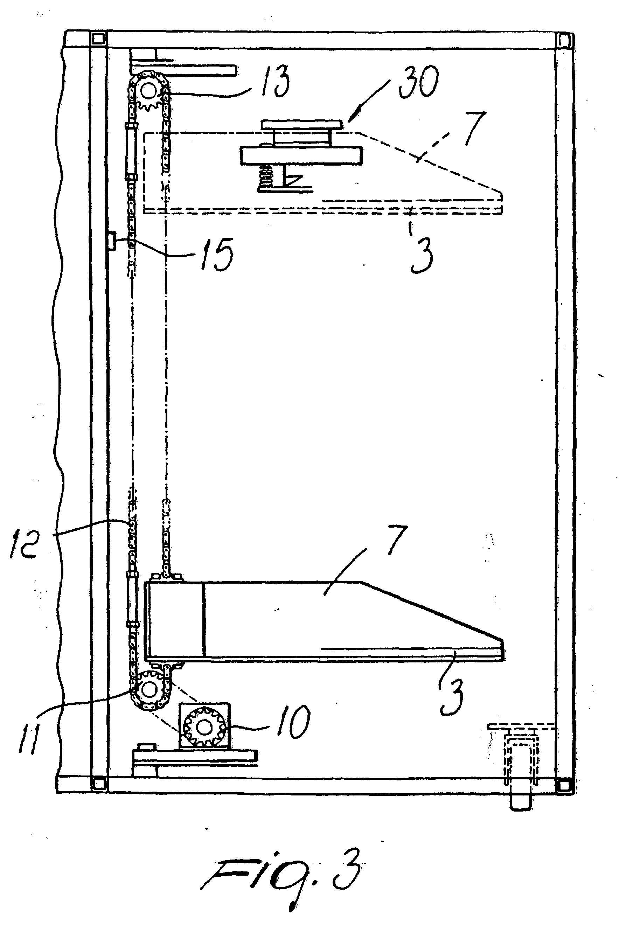

With reference to the above mentioned Figures, the appliance 1 according to the present invention is equipped with a front door 2, which is provided for access to a support surface 3 (shown in Figure 2) for the vessel for collecting the colouring paste mixture.

The door 2 is appropriately equipped with a window 4 for inspection of the vessel loaded on support surface 3.

This support surface 3, shaped advantageously in a circular sector, has on it a plurality of circles 4 inscribed one inside the other, which define the areas where vessels of different dimensions for collecting the colouring paste mixture can lay.

The support surface 3 is connected to the door 2 of the appliance according to the present invention in such a way that the opening of the door 2 causes the support surface 3 to protrude from the inside of the appliance.

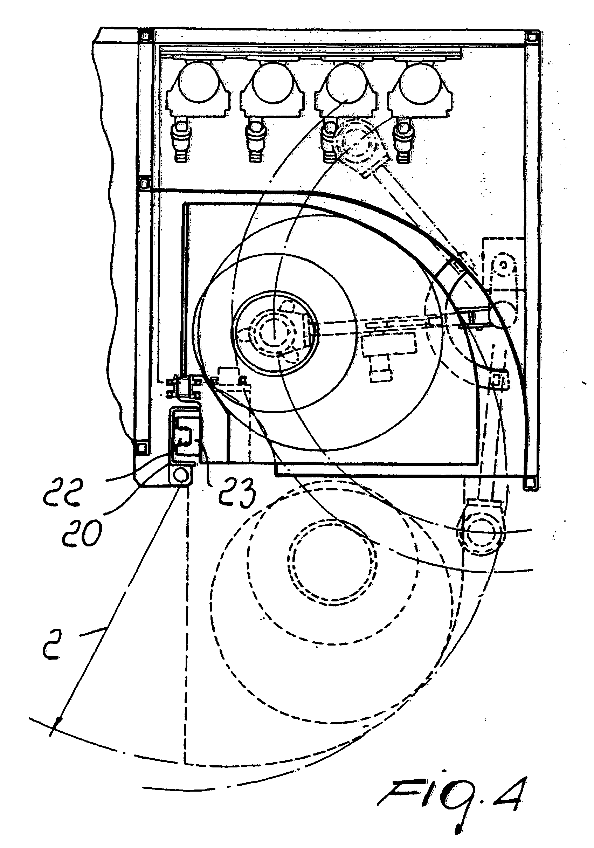

Referring now to the Figures 3 to 6, the driving means for the support surface 3 are shown, the surface 3 being appropriately equipped with walls 7 and 8 arranged to correspond with its sides at right angles, so as to prevent the vessel loaded on it from falling.

Figure 3 shows, in a side view, the support surface 3 in the lower position and in the upper position which it can reach as a consequence of the operation of the driving means.

These driving means comprise a motor 10 connected by a belt to a drive pulley 11 located at the bottom of the appliance, around which is wound a chain 12 which passes around a transmission pulley 13 located at the top of the appliance.

The pulleys 11 and 13 are arranged substantially according to an axis perpendicular to the lower surface and to the upper surface of the appliance.

The movement of the support surface 3 thus occurs through the operation of motor 10 and the consequent loop rotation of the chain 12, whose ends are connected by means: of appropriate fixing devices to the support surface 3.

A photocell 15 is provided at the vertical translation path which the support surface 3 follows.

This photocell 15 has the task of monitoring the passage and thus the presence of the vessel loaded on support surface 3.

Figure 6 shows a side view of the driving means when the door 2 is in an opening position.

In this Figure, a substantially C-shaped guide element 20 is shown, which is connected, by means of fixing devices 21, to the inside wall of the door 2.

Inside the guide element 20, a rail 22 is provided, fixed at the bottom side of the guide element 20 and running along its whole length.

A carriage 23 runs by means of bearings on the rail 22 and is connected in a fixed manner to the support surface 3 so as. to allow this surface to translate vertically along the rail 22.

The carriage 23 is, as. has been mentioned, fixed to the support surface 3, in particular at its side wall 8.

Figure 3 shows, schematically, safety devices provided for cutting off the operation of the motor 10 if the vertical translation of the support surface 3 should continue beyond a preset limit, with the risk that the support surface 3 with the vessel loaded on it striks the upper surface of the appliance.

To avoid this disadvantage, the photocell 15 is actually provided, which monitors the passage (in vertical translation) of the vessel loaded on the support surface 3 and thus stops the motor 10 when the vessel has reached the desired height.

However, in cases where the photocell 15 breaks down, as already mentioned a safety device 30 is provided, which is arrranged in a position above the upright of the support surface 3 which translates vertically along the rail 22.

The safety device 30 therefore has the task of cutting off the operation of the motor 10 when the vessel loaded on the support surface 3 comes into contact with a portion of it, as will be described hereinafter.

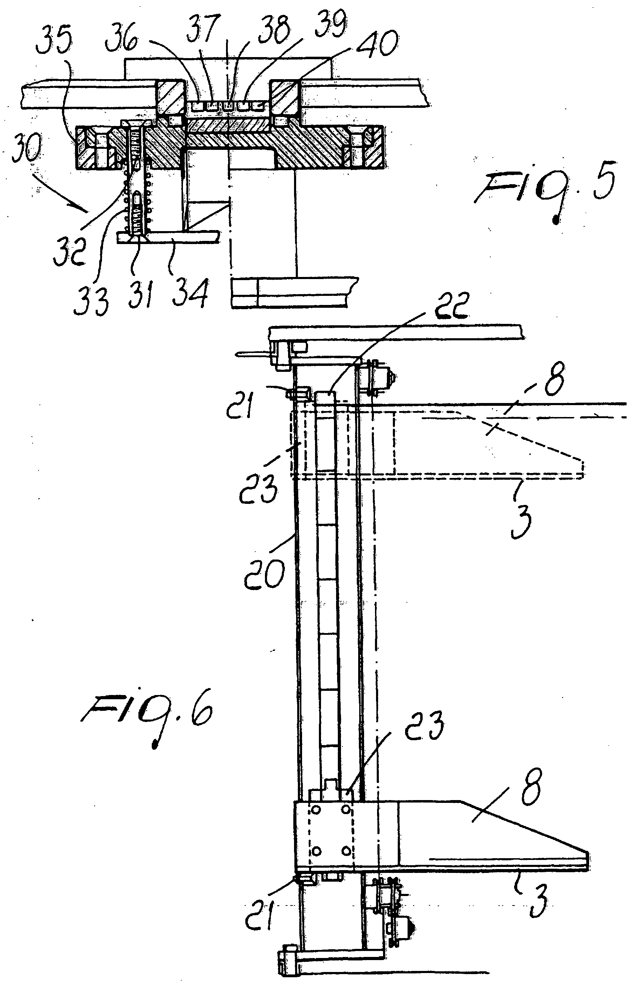

The configuration of the safety device 30 is now described in detail with reference to Figure 5.

The safety device 30 comprises a pair of pins 31 and 32 placed opposite to each. other on a vertical axis corresponding to the translation axis of the support surface 3, resilient devices 33 arranged between a surface 34, transverse to the direction of translation of the support surface 3 and supporting the pin 31 and an element 35, parallel to the surface 34 and supporting the pin 32.

The resilient devices 33, when compressed, allow the pins 31 and 32 to touch each. other, disactivating the operation of the motor 10 and consequently stopping the vertical translation of the support surface 3 with the vessel loaded on it.

Reference numbers 36-40 indicate the delivery nozzles connected to the relevant containers of colouring pastes ( non shown in the drawings) which provide for the delivery of these pastes into the vessel loaded on the support surface 3.

The safety device 30 is arranged in a position underneath the delivery nozzles (36-40).

Referring now to the above cited Figures, the operation of the support surface 3 of the appliance according to the invention is now described.

When the user has to load a vessel with a base colouring paste onto the support surface 3, he opens the door 2 and automatically the motor 10 makes the support surface 3 descend to the minimum height, by running along the rail 22.

The opening of the door 2 also allows the support surface 3 to protrude and thus to be situated on the outside of the appliance, so as to facilitate the loading of the vessel on the surface 3.

Once the vessel is loaded, the door 2 is closed and the surface 3 is driven to translate vertically upwards and to position itself below the delivery nozzles 36-40 (in the drawing, only a few nozzles are shown, by way of example).

The photocell 15 monitors the passage of the vessel in correspondence to its position (and therefore the presence of the vessel itself) and it consequently deactivates the motor 10 to stop the vertical translation of the support surface 3.

Once the filling of the vessel with the desired colouring pastes has been carried out by means of nozzles 36-40, and when the door 2 is opened again, the motor 10 causes the support surface 3 to move back to a position in which its height in relation to the lower surface of the machine allows the user to unload the vessel easily: the height reached when the support surface descends, analogously to the height reached when it rises, depends on the dimensions of the vessel loaded on the surface 3.

The safety device 30, as has been said, prevent the vessel loaded on the surface 3 from going beyond a preset height and therefore from striking the upper surface of the appliance.

In this case, if the vessel should go over the preset height limits, it would strike the surface 34 which thus comprimes the resilient devices 33: the pins 31 and 32 consequently come into contact with each other, automatically cutting off the operation of the motor 10.

It has been established in practice how the appliance according to the invention fully performs the set task, in that it allows the easy operation of. loading and unloading the vessel on the relevant support surface 3, allowing the latter to protrude from the appliance with the. opening of the relevant door 2.

The appliance thus devised is capable of numerous modifications and variations, all of which are included in the scope of the invention; in addition, all details. may be substituted by other, technically equivalent, elements.

In practice, any materials as well as any dimensions may be used, according to requirements and the state of the art, provided that the former are compatible with the use specified,

## Claims

1. Appliance for the delivery of fluids, particularly suitable for the delivery of colouring pastes, comprising a plurality of containers filled with colouring pastes and connected to an equal number of delivery nozzles (36-40) for the delivery of said colouring pastes into a collecting vessel positioned on a support surface (3), **characterized in that** said support surface (3) is suitable to protrude from a part of said appliance and is driven by driving means for its vertical translation in relation to the lower and upper surfaces of said appliance.

2. Appliance according to Claim 1, **characterized in that** said support surface (3) is connected to a door (2) of said appliance to allow access to its internal portion.

3. Appliance according to Claim 1, **characterized in that** it provides means (15) for monitoring the presence of the collecting vessel on said support surface(3), connected to said driving means.

4. Appliance according to Claim 3, **characterized in that** said driving means comprise a motor (10) connected to a drive pulley (11) and a transmission pulley (13) for drawing a chain (12), the ends of said chain (12) being connected in a fixed manner to said support surface (3).

5. Appliance according to one or more of the previous claims, **characterized in that** the inside surface of said door (2) is equipped, with a guide element (20) inside which is fixed a rail (22).

6. Appliance according to claim 5, **characterized in that** said support surface (3) is fixed to a carriage (23) sliding on said rail (22), for its vertical translation along said rail (22).

7. Appliance according to one or more of the previous claims, **characterized in that** said support surface (3) is shaped according to a circular sector.

8. Appliance according to one or more of the previous claims, **characterized in that** it comprises a safety device (30) arranged in a position underneath said delivery nozzles (36-40) and. in correspondence with the upright of said support surface (3).

9. Appliance according to claim 8, **characterized in that** said safety device (30) comprises a surface (34) transverse to the direction of translation of said support surface (3), a support element (35), parallel to said surface (34), and resilient devices (33), arranged between said surface (34) and said support element (35); a pair of opposed contact elements (34,32) respectively integral to said surface (34) and to said support element (35), being further provided.

10. Appliance according to claim 9, **characterized in that** said contact elements (31,32) are connected to said motor (10) to cut off its operation following contact with them.

11. Appliance according to one or more of the previous claims, **characterized in that** said support surface (3) provides a pair of side walls (7,8) arranged at its sides which are arranged at right angles.

## Patentansprüche

1. Anlage zur Abgabe von Fluiden, insbesondere zur Abgabe von Farbstoffen, zu der mehrere mit Farbstoffen gefüllte Behälter gehören und die mit ebenso vielen Abgabedüsen (36-40) verbunden ist zur Abgabe dieser Farbstoffe in einen Sammelbehälter, der auf einem Träger (3) steht, wobei dieser Träger (3) aus einem Teil der Anlage herausgeschwenkt werden kann und durch eine Antriebsvorrichtung in der Richtung senkrecht zu Boden und Decke der Anlage verschoben werden kann.

2. Anlage entsprechend Anspruch 1, **gekennzeichnet dadurch, dass** der Träger (3) mit einer Tür (2) der Anlage verbunden ist, so dass Zugang zum Inneren besteht.

3. Anlage entsprechend Anspruch 1, **gekennzeichnet dadurch, dass** sie mit einer Einrichtung (15) ausgestattet ist, die das Vorhandensein des Sammelbehälters auf dem Träger (3) überwacht und mit dem genannten Antrieb verbunden ist.

4. Anlage entsprechend Anspruch 3, **gekennzeichnet dadurch, dass** der genannte Antrieb aus einem Motor (10) besteht, der mit einer Antriebsscheibe (11) und einer Übertragungsscheibe (13) so verbunden ist, dass er Zug auf einer Kette (12) ausübt,
wobei die Kette (12) fest mit dem Träger (3) verbunden ist.

5. Anlage entsprechend einem oder mehreren der vorangehenden Ansprüche, **gekennzeichnet dadurch, dass** sich auf der Innenfläche der Tür (2) ein Führungselement (20) befindet, in dem eine Schiene (22) befestigt ist.

6. Anlage entsprechend Anspruch 5, **gekennzeichnet dadurch, dass** der Träger (3) fest mit einem Schlitten (23) verbunden ist, der zur Verschiebung des Trägers (3) entlang der Schiene (22) auf dieser Schiene (22) gleitet.

7. Anlage entsprechend einem oder mehreren der vorangehenden Ansprüche, **gekennzeichnet dadurch, dass** der Träger (3) die Gestalt eines Kreissektors besitzt.

8. Anlage entsprechend einem oder mehreren der vorangehenden Ansprüche, **gekennzeichnet dadurch, dass** zu ihr eine Sicherheitsvorrichtung (30) gehört, die unterhalb der Abgabedüsen (36-40) und senkrecht über dem Träger (3) untergebracht ist.

9. Anlage entsprechend Anspruch 8, **gekennzeichnet dadurch, dass** die Sicherheitsvorrichtung (30) eine Oberfläche quer zur Richtung, in der der Träger (3) verschoben wird, besitzt, sowie ein parallel zur Oberfläche (34) liegendes tragendes Element (35) und federnde Elemente (33), die sich zwischen der Oberfläche (34) und dem tragenden Element (35) befinden; weiter gehört zu der Sicherheitsvorrichtung ein Paar einander gegenüberliegender Kontaktelemente (31,32) die jeweils mit der Oberfläche (34) bzw. mit dem tragenden Element (35) fest verbunden sind.

10. Anlage entsprechend Anspruch 9, **gekennzeichnet dadurch, dass** die Kontaktelemente (31,32) so mit dem Motor (10) verbunden sind, dass dessen Betrieb eingestellt wird, sobald die Kontaktelemente einander berühren.

11. Anlage entsprechend einem oder mehreren der vorangehenden Ansprüche, **gekennzeichnet dadurch, dass** der Träger (3) mit einem Paar seitlicher Wände ausgestattet ist, die in einem rechten Winkel an seinen Seiten angeordnet sind.

## Revendications

1. Appareil pour la délivrance de fluides, convenant notamment pour la délivrance de pâtes colorantes, comprenant une pluralité de récipients remplis par des pâtes colorantes et raccordés à un nombre égal de buses de délivrance (36-40) pour la délivrance desdites pâtes colorantes dans une enceinte de collecte placée sur une surface de support (3), **caractérisé en ce que** ladite surface de support (3) est disposée en saillie sur une partie dudit appareil et est entraînée par des moyens d'entraînement pour sa translation verticale par rapport aux surfaces inférieure et supérieure dudit appareil.

2. Appareil selon la revendication 1, **caractérisé en ce que** ladite surface de support (3) est raccordée à une porte (2) dudit appareil pour permettre l'accès à la partie interne de l'appareil.

3. Appareil selon la revendication 1, **caractérisé en ce qu'**il comporte des moyens (15) pour contrôler la présence du récipient de collecte sur ladite surface de support (3) raccordée auxdits moyens d'entraînement.

4. Appareil selon la revendication 3, **caractérisé en ce que** lesdits moyens d'entraînement comprennent un moteur (10) raccordé à une poulie d'entraînement (11) et à une poulie de transmission (13) pour entraîner une chaîne (12), les extrémités de ladite chaîne (12) étant raccordées d'une manière fixe à ladite surface de support (3).

5. Appareil selon une ou plusieurs des revendications précédentes, **caractérisé en ce que** la surface intérieure de ladite porte (2) est équipée d'un élément de guidage (20), à l'intérieur duquel est fixé un rail (22).

6. Appareil selon la revendication 5, **caractérisé en ce que** ladite surface de support (3) est fixée à un chariot (23) glissant sur ledit rail (22), pour sa translation verticale le long dudit rail (22).

7. Appareil selon une ou plusieurs des revendications précédentes, **caractérisé en ce que** ladite surface de support (3) est agencée conformément à un secteur circulaire.

8. Appareil selon une ou plusieurs des revendications précédentes, **caractérisé en ce qu'**il comprend un dispositif de sécurité (30) disposé dans une position située au-dessous desdites buses de délivrance (26-40) et de manière à correspondre avec la partie verticale de ladite surface de support (3).

9. Appareil selon la revendication 8, **caractérisé en ce que** ledit dispositif de sécurité (30) comprend une surface (34) qui s'étend transversalement par rapport à la direction de translation de ladite surface de support (3), un élément de support (35) parallèle à ladite surface (34), et des dispositifs élastiques (33) disposés entre ladite surface (33) et ledit élément de support (35); une paire d'éléments de contact opposés (31, 32) étant respectivement solidaires de ladite surface (34) et dudit élément de support (35).

10. Appareil selon la revendication 9, **caractérisé en ce que** lesdits éléments de contact (31, 32) sont raccordés audit moteur (10) de manière à interrompre son fonctionnement après être venu en contact avec ces derniers.

11. Appareil selon une ou plusieurs des revendications précédentes, **caractérisé en ce que** ladite surface de support (3) comporte une paire de parois latérales (7, 8) situées sur ses côtés et qui sont disposées à angle droit.
